# EUROPÄISCHE PATENTANMELDUNG

(11) **EP 0 900 604 A1**
(43) Veröffentlichungstag der Anmeldung: **10.03.1999**
(21) Anmeldenummer: 98114693.9
(22) Anmeldetag: 05.08.1998
(51) Int. Cl.: B21D 49/00, B32B 3/08, B32B 31/00, B32B 35/00, B21C 37/06

(54) **Umformbares, bereits vorgeformtes, dünnwandiges Halbfabrikat aus insbesondere Metall**

(30) Priorität: 30.08.1997 DE 19737969
(71) Anmelder: DAIMLER-BENZ AKTIENGESELLSCHAFT, 70567 Stuttgart (DE)
(72) Erfinder: Golle, Roland, Dr., 95701 Pechbrunn (DE); Hoffmann, Hartmut, Prof. Dr., 74206 Bad Wimpfen (DE); Thoms, Volker, Prof. Dr., 75365 Calw (DE)

(57) **Zusammenfassung**

Bei einem umformbaren, bereits vorgeformten, dünnwandigen Halbfabrikat aus insbesondere Blech oder einem gepreßten bzw. gegossenen Profil, das noch umzuformen ist zu einem Fertigteil, insbesondere zu einem Karosserieteil eines Kraftfahrzeuges, bei dem ein Wandbereich durch ein aufgebrachtes Verstärkungsteil verstärkt ist, soll die Verstärkung möglichst rationell erzeugbar sein.

Zu diesem Zweck ist das Verstärkungsteil auf einen durchgehenden Wandbereich des Halbfabrikats fest verbunden aufgebracht.

Das Halbfabrikat kann insbesondere ein Rohr oder sonstiges geschlossenes Hohlprofil sein.

Als feste Verbindung dient zweckmäßigerweise eine Klebe-, Löt-, Schweiß- oder Nietverbindung.

## Beschreibung

Die Erfindung betrifft ein umformbares, bereits vorgeformtes, dünnwandiges Halbfabrikat aus insbesondere Metall nach dem Oberbegriff des Patentanspruchs 1.

Bei Fertigteilen aus Blech, die aus umgeformten Blechteilen bestehen, ist es bereits bekannt, am Fertigteil verstärkte Wandbereiche bereits bei den zum Fertigteil umzuformenden Blechplatinen vorzusehen. Derartige Verstärkungsbereiche werden dabei jeweils dadurch erzeugt, daß in den betreffenden Bereichen das Material des zu verstärkenden Basisbleches herausgetrennt und durch ein anderes Material ersetzt wird. Das Ersatzmaterial muß dabei auf die entsprechende Ausnehmung in dem Basisblech abgestimmt sein. Die Befestigung des Ersatzmateriales, beispielsweise ein Blech aus einem anderen Material als das Basisblech, muß durch Schweißen oder Kleben mit dem Basisblech verbunden werden. Derart verstärkte Basisbleche und deren Herstellung sind beispielsweise in DE 41 04 256 A1 und DE 41 10 418 C1 beschrieben.

Bei rohrförmigen Fertigteilen ist es aus US 4,759,111 bekannt, den Verstärkungsbereich bereits bei dem umzuformenden Basisrohr durch das Ineinanderschieben zweier Rohre zu erzeugen.

Die Länge des Verstärkungsrohres ist dabei auf die Länge des Verstärkungsbereiches beschränkt.

Die Erfindung beschäftigt sich mit dem Problem, Verstärkungsteile an Wandbereichen von Werkstücken, die aus umformbaren bereits vorgeformten dünnwandigen Halbfabrikaten durch Umformen hergestellt werden, rationell fertigen zu können.

Eine Lösung dieses Problemes zeigt das kennzeichnende Merkmal des Patentanspruchs 1 auf.

Die Erfindung beruht auf dem Gedanken, das Verstärkungsteil an dem umformbaren bereits vorgeformten dünnwandigen Halbfabrikat fest aufzubringen und das derart vorbereitete Halbfabrikat in ein Fertigteil mit den gewünschten Verstärkungsbereichen umzuformen.

Das Halbfabrikat kann insbesondere ein Rohr oder Profil sein, das auf Umfangsbereichen innen oder außen verstärkt werden soll.

Die feste Verbindung des Verstärkungsteiles auf dem Halbfabrikat kann vorteilhafterweise durch Kleben, Löten, Schweißen oder Nieten erfolgen.

Insbesondere durch eine Klebe- oder Lötverbindung zwischen dem Verstärkungs- und dem Halbfabrikat erhält der Werkstoffverbund aus Basis- und Verstärkungsteil gute Dämpfungseigenschaften, wie sie von sandwichartig aufgebauten Bauteilen bekannt sind.

Als Halbfabrikate eignen sich für die Erfindung offene und geschlossene Profile, unter anderem walzprofilierte Bleche, stranggepreßte Profile, gegossene Profile oder gezogene Profile.

Ausführungsbeispiele der Erfindung sind in der Zeichnung dargestellt.

Es zeigen jeweils in perspektivischer Darstellung
- Fig. 1: ein Rohr mit einem innen eingesetzten Verstärkungsteil,
- Fig. 2: ein Rohr mit einem außen aufgesetzten Verstärkungsteil,
- Fig. 3: ein umfangsmäßig offenes Profilteil mit einem eingesetzten Verstärkungsteil.

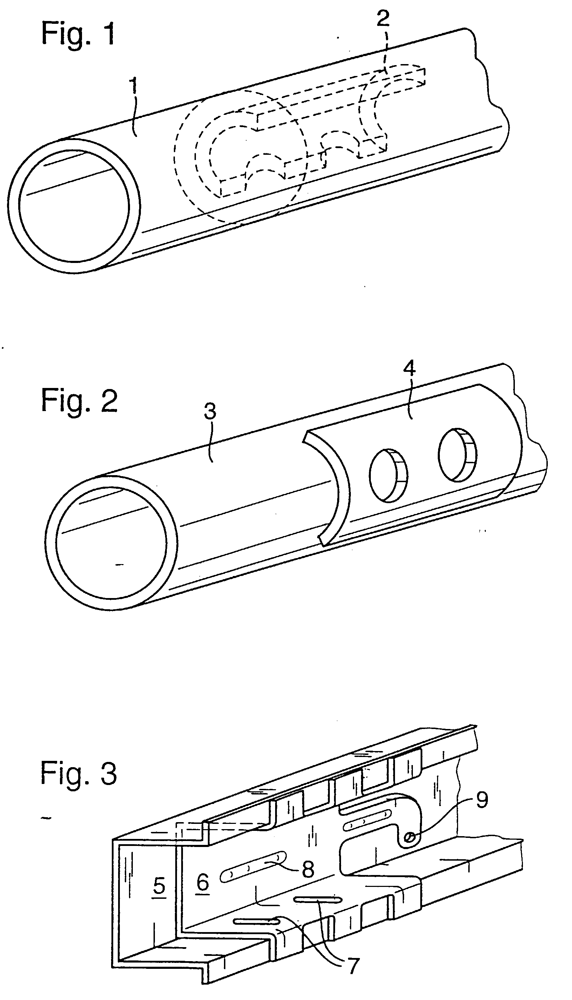

In ein Rohr 1 aus umformbarem Metall ist im Inneren auf einem Teilbereich mit Bezug auf dessen Länge und Umfang ein profiliertes Metallblech 2 eingeklebt (Fig. 1).

Auf ein Rohr 3 ist außen auf einen längen- und umfangsmäßigen Teilbereich ein gelochtes Metallblech 4 aufgeklebt (Fig. 2).

Die derart verstärkte Halbfabrikate darstellenden Rohre sind auf übliche Weise in beliebig geformte Fertigteile umformbar.

Bei dem Ausführungsbeispiel nach Fig. 3 ist in ein vorgeformtes Metallprofil 5 ein ebenfalls vorgeformtes Metallblech 6 als Verstärkung für einen lokalen Wandbereich eingeklebt. Das Metallblech 6 ist mit Ausnehmungen 7 versehen. In das mit dem Metallblech 6 verstärkte Metallprofil 5 ist eine von beiden Materialien begrenzte Sicke 8 nachträglich eingeformt, das heißt das Einformen wird vorgenommen, nachdem das Basis-Metallprofil 5 bereits mit dem Metallblech 6 am Halbfabrikat durch Verklebung miteinander verbunden worden ist.

Eine Durchgangsöffnung 9 wird an dem fertigen Teil eingearbeitet, wozu das Metallprofil 5 und das Metallblech 6 gemeinsam durchbohrt werden.

Ein besonderer Vorteil der Erfindung besteht darin, daß das Halbfabrikat als Basisteil werkstoffmäßig und geometrisch durch die aufzubringende Verstärkung unverändert bleiben kann. Die Umformung des Halbfabrikates zu einem Fertigteil kann kostengünstig und ohne Vorbehandlung erfolgen. Die Verstärkung des Halbfabrikates kann direkt am Fertigungsort der Umformung zu einem Fertigteil erfolgen, da für das Anbringen der Verstärkungsteile keine komplizierten Fertigungseinrichtungen benötigt werden. Dies gilt insbesondere für eine Verbindung der Verstärkungsteile durch Kleben an dem Halbfabrikat.

## Patentansprüche

1. Umformbares, bereits vorgeformtes, dünnwandiges Halbfabrikat aus insbesondere Blech, das noch umzuformen ist zu einem Fertigteil, insbesondere zu einem Karosserieteil eines Kraftfahrzeuges, bei dem ein Wandbereich durch ein aufgebrachtes Verstärkungsteil verstärkt ist,
**dadurch gekennzeichnet,**
daß das Verstärkungsteil (2, 4, 6) auf einen durchgehenden Wandbereich des noch umzuformenden Halbfabrikats fest verbunden aufgebracht ist.

2. Halbfabrikat nach Anspruch 1,
**dadurch gekennzeichnet,**
daß das Halbfabrikat ein Rohr oder sonstiges geschlossenes Hohlprofil (1, 3) ist.

3. Halbfabrikat nach Anspruch 1 oder 2,
**dadurch gekennzeichnet,**
daß die feste Verbindung eine Klebe-, Löt-, Schweiß- oder Nietverbindung ist.
